# EUROPÄISCHE PATENTSCHRIFT

(11) **EP 1 279 542 B1**
(45) Veröffentlichungstag und Bekanntmachung des Hinweises auf die Patenterteilung: **17.05.2006**
(21) Anmeldenummer: 02014406.9
(22) Anmeldetag: 28.06.2002
(51) Int. Cl.: B60J 10/06, B60J 10/00

(54) **Dichtungsprofil fÜr einen Kraftwagen**
Sealing profile for a motor vehicle
Profil d'étanchéité pour véhicule automobile

(30) Priorität: 25.07.2001 DE 10136174
(43) Veröffentlichungstag der Anmeldung: 29.01.2003
(73) Patentinhaber: DaimlerChrysler AG, 70567 Stuttgart (DE)
(72) Erfinder: Graf, Thomas, 71069 Sindelfingen (DE)

(56) Entgegenhaltungen:
- EP-A- 0 712 749
- DE-A- 2 827 372
- DE-U- 29 712 859
- US-A- 4 819 381

## Beschreibung

Die Erfindung betrifft ein Dichtungsprofil der im Oberbegriff des Patentanspruchs 1 angegebenen Art.

Ein solches, der DE 199 45 868 C1 zu entnehmendes Dichtungsprofil zwischen der Karosserie eines Kraftwagens und einer verfahrbaren Fensterscheibe umfasst eine Aufnahmenut, in welche beim Schließen des Fensters eine mit dem Dichtungsprofil zusammenwirkende Randseite der Scheibe eintaucht. Im Verlauf des Eintauchvorgangs wird dabei ein die Nut bildender Profilabschnitt bis zu einer Endform des Dichtungsprofils von der Randseite der Scheibe verformungsbeaufschlagt. Bei geschlossener Scheibe sorgt der die Nut bildende Profilabschnitt einerseits für eine Abstützung der Scheibe beispielsweise gegen Windkräfte und andererseits für die Abdichtung gegenüber der Scheibe. Um eine gute Abdichtung zu erreichen, muss die Scheibe jedoch mit relativ hoher Anpresskraft gegen den Profilabschnitt gedrückt werden. Um diese Anpresskraft aufzubringen, ist daher eine relativ große Antriebskraft des Fensterhebers erforderlich.

Aufgabe der Erfindung ist es daher, ein Dichtungsprofil der eingangs genannten Art zu schaffen, welches unter Beibehaltung einer guten Abstützung bereits bei geringerer Anpresskraft der Scheibe eine zuverlässige Abdichtung ermöglicht.

Diese Aufgabe wird erfindungsgemäß durch ein Dichtungsprofil mit den Merkmalen des Anspruchs 1 gelöst. Vorteilhafte Ausgestaltungen der Erfindung sind den übrigen Ansprüchen zu entnehmen.

Bei dem Dichtungsprofil nach der Erfindung weist der Profilabschnitt auf seiner dem Scheibenrand zugewandten Seite eine weichere, elastische Dichtungsschicht, beispielsweise aus Moosgummi oder dgl. auf. Hierdurch kann eine sehr gute Abdichtung bereits bei einer relativ geringen Anpresskraft der Scheibe gegen den Profilabschnitt erreicht werden, wobei sich die weiche Dichtungsschicht an die Breitseite und/oder an die geschliffene Schmalseite der Scheibe anlegt. Die dahinterliegende härtere Tragschicht hat einerseits die Tragfunktion für die relativ hierzu weichere Dichtungsschicht, andererseits sorgt die Tragschicht für eine ausreichende Abstützung der Scheibe beispielsweise gegen Windkräfte.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig.1: ein vergrößerter schematischer Querschnitt durch das Dichtungsprofil nach der Erfindung und eine ausschnittweise erkennbare Fensterscheibe;
- Fig.2: ein vergrößerter schematischer Querschnitt durch das Dichtungsprofil in einer ersten Eintauchphase der ausschnittweise erkennbaren Fensterscheibe;
- Fig.3: ein vergrößerter schematischer Querschnitt durch das Dichtungsprofil im weiteren Verlauf der Eintauchphase der ausschnittweise erkennbaren Fensterscheibe; und in
- Fig.4: ein vergrößerter schematischer Querschnitt durch das Dichtungsprofil nach Abschluss des Eintauchens der ausschnittweise erkennbaren Fensterscheibe.

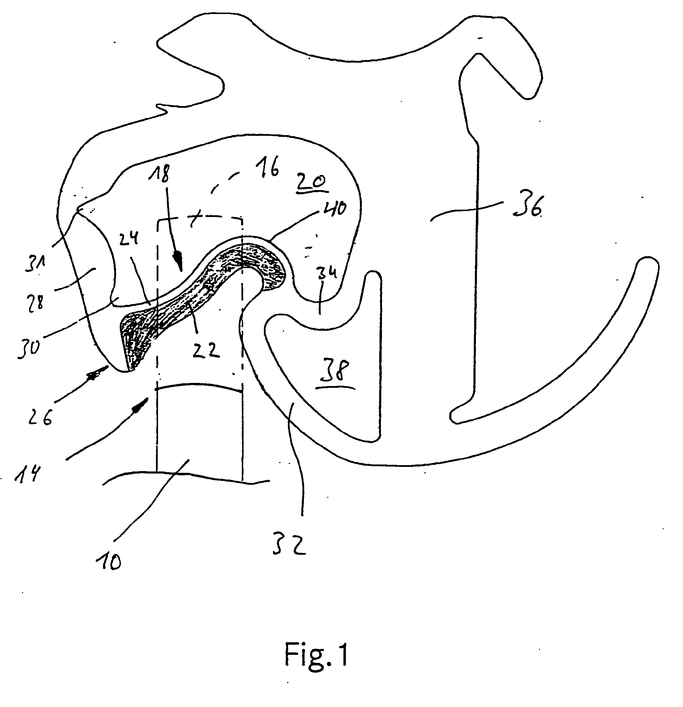

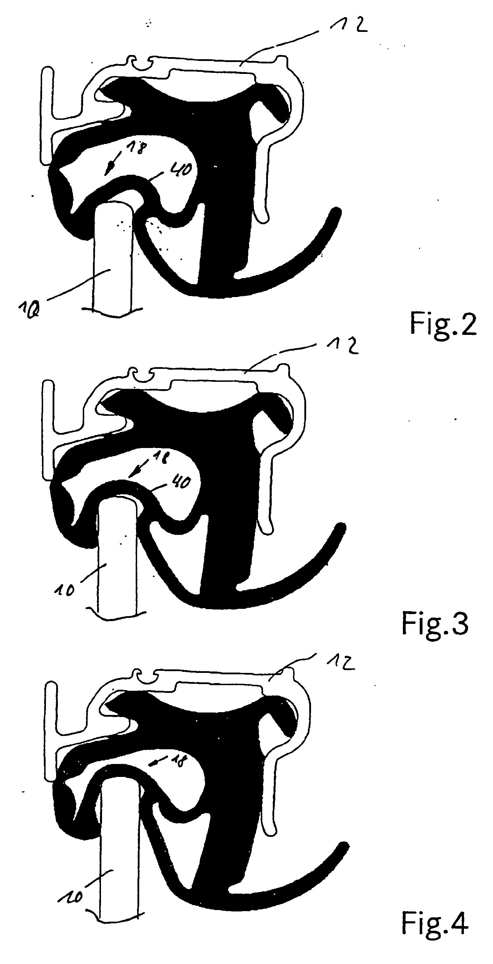

In Fig.1 ist ein vergrößerter schematischer Querschnitt durch ein Dichtungsprofil zwischen einem in Fig.1 nicht gezeigten Karosserieteil eines Kraftwagens und einer verfahrbaren Fensterscheibe 10 dargestellt. In dem hier gezeigten Ausführungsbeispiel handelt es sich um die höhenverfahrbare Seitenscheibe 10 einer rahmenlosen Kraftwagentür, wobei das Dichtungsprofil karosserieseitig an einer in den Figuren 2 bis 4 erkennbaren A-Säule bzw. einem seitlichen Dachträger 12 befestigt ist. Natürlich wäre es auch denkbar, das Dichtungsprofil zwischen einer Seitenscheibe und dem Rahmenprofil eines Türrahmens einzusetzen. In Fig.1 ist die Lage der ausschnittweise erkennbaren Seitenscheibe 10 in einer ersten Eintauchphase in das Dichtungsprofil mit ausgezogenen Linien und nach Abschluss des Eintauchens in das Dichtungsprofil gestrichelt dargestellt. Zum Öffnen und Schließen der Tür wird die Scheibe 10 mittels einer Kurzhubsteuerung aus der gestrichelt angedeuteten in die mit ausgezogenen Linien dargestellte Lage gebracht.

Das Dichtungsprofil besteht im wesentlichen aus einem üblichen weichelastischen Material, beispielsweise einer Gummimischung und umfasst eine Aufnahmenut 14, in welche die Randseite 16 der Scheibe 10 eintaucht. Die Aufnahmenut 14 wird durch einen Profilabschnitt 18 gebildet, der beim Eintauchen der Randseite 16 derart beaufschlagt wird, dass eine in Verfahrrichtung der Scheibe dahinterliegende Hohlkammer 20 beim Schließen der Scheibe 10 eingedrückt wird. Der Profilabschnitt 18 umfasst auf seiner dem Scheibenrand 16 zugewandten Seite eine weichelastische Dichtungsschicht 22, die auf einer dahinterliegenden, härteren Tragschicht 24 des Profilabschnitts 18 angeordnet ist. Die Dichtungsschicht 22 besteht hier aus einem sog. Moosgummi oder dgl. weicheren Material; die härtere Tragschicht 24 besteht hier aus demselben Material wie das Dichtungsprofil und ist einstückig mit diesem ausgebildet. Dabei weist die Tragschicht 24 über den gesamten Fußbereich der Aufnahmenut 14 eine konstante Breite auf. Die weichelastische Dichtungsschicht 22 hat hier etwa die zweifache bis vierfache Dicke der Tragschicht 24. Dem Profilabschnitt 18 ist auf dem fahrzeugaußenseitigen Seitenbereich der Nut 14 ein Dichtvorsprung 26 zugeordnet, wobei sich die Dichtungsschicht 22 bis zur der Scheibe 10 zugewandten Innenseite des Dichtvorsprungs 26 erstreckt. In Verlängerung des Dichtvorsprungs 26 ist ein Seitenabschnitt 28 des Dichtungsprofils mit zwei Sollknickstellen 30,31 vorgesehen, deren Funktion insbesondere unter Bezugnahme auf die Figuren 2 bis 4 noch erläutert werden wird.

Innenseitig der Scheibe 10 umfasst das Dichtungsprofil einen Scheibeneinlaufabschnitt 32, welcher über einen Federsteg 34 an einem hier etwa vertikal verlaufenden Hauptsteg 36 des Profils abgestützt ist. Dabei begrenzen der Scheibeneinlaufabschnitt 32, der Federsteg 34 und der Hauptsteg 36 eine weitere Hohlkammer 38. Beim Hochfahren der Scheibe 10 gleitet der Randbereich 16 an dem Scheibeneinlaufabschnitt 32 entlang in die Nut 14 und wird dadurch in ihrer Lage quer zur Bewegungsrichtung positioniert. Dies wird unterstützt durch den Federsteg 34, der geometrisch so ausgelegt ist, dass die Rückstellkräfte des Scheibeneinlaufabschnitts 32 auf den Randbereich 16 während der gesamten Eintauchphase in die Nut 14 annähernd konstant bleiben. Dadurch wird eine definierte Position der Scheibe 10 bei unterschiedlichen Eintauchtoleranzen der Scheibe 10 in Fahrzeugquerrichtung erreicht.

In den Figuren 2 bis 4 ist in jeweils vergrößertem schematischem Querschnitt das Dichtungsprofil in einer ersten Eintauchphase der ausschnittweise erkennbaren Fensterscheibe 10 in die Nut 14, den weiteren Verlauf der Eintauchphase, sowie nach Abschluss des Eintauchens der Fensterscheibe 10 in die Nut 14 erkennbar. Beim Bewegen des Profilabschnitts 18 in Richtung der Hohlkammer 20 wird der Dichtvorsprung 26 in Richtung der äußeren Breitseite der Scheibe 10 bewegt und legt sich an diese an. Dieses Anlegen wird durch die beiden Sollknickstellen 30,31 im Seitenabschnitt 28 unterstützt. Die weiche Dichtungsschicht 22 dichtet sowohl zur glatten Breitseite wie auch zur geschliffenen Schmalseite ab. Dabei ist durch die weiche Gummimischung der Dichtungsschicht 22 eine besonders gute Abdichtung insbesondere auch gegen Windeinflüsse geschaffen. Die etwas härtere Gummimischung der Tragschicht 24 hingegen sorgt für einen guten Verbund zwischen dem Dichtungsprofil und der Scheibe 10 gegen die auftretenden Windkräfte. Zur Verbesserung des Toleranzausgleichs umfasst der Profilabschnitt 18 eine sich etwa in Verlängerung des Scheibeneinlaufabschnitts 32 erstreckenden Schlaufenabschnitt 40, durch welchen die Scheibe in die Nut 14 eintauchen kann, ohne dass der Profilabschnitt 18 überdehnt werden muss.

## Patentansprüche

1. Dichtungsprofil zwischen der Karosserie (12) eines Kraftwagens und einer verfahrbaren Fensterscheibe (10),
mit einer Aufnahmenut (14), in welche beim Schließen des Fensters (10) eine mit dem Dichtungsprofil zusammenwirkende Randseite (16) der Scheibe (10) eintaucht, wobei ein die Nut (14) bildender Profilabschnitt (18) bis zu einer Endform des Dichtungsprofils von der Randseite (16) verformungsbeaufschlagt ist,
**dadurch gekennzeichnet,**
**dass** der Profilabschnitt (18) auf seiner dem Scheibenrand (16) zugewandten Seite eine weichelastische Dichtungsschicht (22) aufweist, die auf einer dahinterliegenden, härteren Tragschicht (24) angeordnet ist.

2. Dichtungsprofil nach Anspruch 1,
**dadurch gekennzeichnet,**
**dass** der Profilabschnitt (18) eine Begrenzungswand einer Hohlkammer (20) bildet, die beim Schließen der Scheibe (10) eingedrückt wird.

3. Dichtungsprofil nach Anspruch 1,
**dadurch gekennzeichnet,**
**dass** die Tragschicht (24) über den gesamten Fußbereich der Aufnahmenut (14) eine konstante Breite aufweist.

4. Dichtungsprofil nach Anspruch 1,
**dadurch gekennzeichnet,**
**dass** der Profilabschnitt (18) auf dem fahrzeugaußenseitigen Seitenbereich der Nut (14) einen Dichtvorsprung (26) aufweist, der sich beim Schließen der Scheibe (10) an deren Breitseite anlegt.

5. Dichtungsprofil nach Anspruch 4,
**dadurch gekennzeichnet,**
**dass** in Verlängerung des Dichtvorsprungs (26) ein Seitenabschnitt (28) des Dichtungsprofils mit zwei Sollknickstellen (30,31) vorgesehen ist, an denen der Seitenabschnitt (28) beim Schließen der Scheibe (10) geknickt wird.

6. Dichtungsprofil nach Anspruch 1,
**dadurch gekennzeichnet,**
**dass** ein Scheibeneinlaufabschnitt (32) vorgesehen ist, welcher über einen Federsteg (34) an einem Hauptsteg (36) abgestützt ist.

7. Dichtungsprofil nach Anspruch 6,
**dadurch gekennzeichnet,**
**dass** der Scheibeneinlaufabschnitt (32), der Federsteg (34) und der Hauptsteg (36) eine weitere Hohlkammer (38) begrenzen.

8. Dichtungsprofil nach Anspruch 1,
**dadurch gekennzeichnet,**
**dass** die weichelastische Dichtungsschicht (22) die zweifache bis vierfache Dicke der Tragschicht (24) aufweist.

9. Dichtungsprofil nach Anspruch 1,
**dadurch gekennzeichnet,**
**dass** die weichelastische Dichtungsschicht (22) aus Moosgummi besteht.

## Claims

1. Sealing profile between the body (12) of a motor vehicle and a moveable window (10), having a receiving groove (14) into which an edge side (16) of the window (10), which side interacts with the sealing profile, enters during closure of the window (10), a profiled section (18) forming the groove (14) being subjected to deformation by the edge side (16) until the sealing profile obtains its final shape, **characterized in that** the profiled section (18) has, on its side facing the window edge (16), a soft elastic sealing layer (22) which is arranged on a harder supporting layer (24) situated behind it.

2. Sealing profile according to Claim 1, **characterized in that** the profiled section (18) forms a boundary wall of a hollow chamber (20), which is pressed in during closure of the window (10).

3. Sealing profile according to Claim 1, **characterized in that** the supporting layer (24) has a constant width over the entire foot region of the receiving groove (14).

4. Sealing profile according to Claim 1, **characterized in that** the profiled section (18) has, on that side region of the groove (14) which is on the outside of the vehicle, a sealing projection (26) which rests against the wide side of the window (10) during closure thereof.

5. Sealing profile according to Claim 4, **characterized in that** in an extension of the sealing projection (26) a side section (28) of the sealing profile is provided with two predetermined buckling points (30, 31) at which the side section (28) is buckled during closure of the window (10).

6. Sealing profile according to Claim 1, **characterized in that** a window run-in section (32) is provided, the said section being supported on a main web (36) via a spring web (34).

7. Sealing profile according to Claim 6, **characterized in that** the window run-in section (32), the spring web (34) and the main web (36) bound a further hollow chamber (38).

8. Sealing profile according to Claim 1, **characterized in that** the soft elastic sealing layer (22) is twice to four times the thickness of the supporting layer (24).

9. Sealing profile according to Claim 1, **characterized in that** the soft elastic sealing layer (22) consists of cellular rubber.

## Revendications

1. Profilé d'étanchéité entre la carrosserie (12) d'un véhicule automobile et une vitre de fenêtre mobile (10), comprenant une rainure réceptrice (14) dans laquelle plonge, à la fermeture de la fenêtre (10), un côté périphérique (16) coopérant avec le profilé d'étanchéité de la vitre (10), une section de profilé (18) formant la rainure (14) étant sollicitée à la déformation par le côté périphérique (16) jusqu'à une forme finale du profilé d'étanchéité,
**caractérisé en ce que**
la section de profilé (18) présente, sur son côté tourné vers le bord de la vitre (16), une couche d'étanchéité à souplesse élastique (22) qui est disposée sur une couche porteuse sous-jacente plus dure (24).

2. Profilé d'étanchéité selon la revendication 1,
**caractérisé en ce que**
la section de profilé (18) constitue une paroi de délimitation d'une chambre creuse (20), laquelle paroi s'enfonce lors de la fermeture de la vitre (10).

3. Profilé d'étanchéité selon la revendication 1,
**caractérisé en ce que**
la couche porteuse (24) présente, sur toute la zone de pied de la rainure réceptrice (14), une largeur constante.

4. Profilé d'étanchéité selon la revendication 1,
**caractérisé en ce que**
la section de profilé (18) présente, sur la zone latérale située sur le côté extérieur du véhicule de la rainure (14), une saillie d'étanchéité (26) qui, lors de la fermeture de la vitre (10), se pose sur son côté large.

5. Profilé d'étanchéité selon la revendication 4,
**caractérisé en ce que**,
dans le prolongement de la saillie d'étanchéité (26), il est prévu une section latérale (28) du profilé d'étanchéité dotée de deux points de pliure théorique (30, 31) où la section latérale (28) se plie lors de la fermeture de la vitre (10).

6. Profilé d'étanchéité selon la revendication 1,
**caractérisé en ce que**
il est prévu une section d'entrée de la vitre (32) qui s'appuie par une traverse à ressort (34) sur une traverse principale (36).

7. Profilé d'étanchéité selon la revendication 6,
**caractérisé en ce que**
la section d'entrée de la vitre (32), la traverse à ressort (34) et la traverse principale (36) délimitent une autre chambre creuse (38).

8. Profilé d'étanchéité selon la revendication 1,
**caractérisé en ce que**
la couche d'étanchéité à souplesse élastique (22) a deux fois à quatre fois l'épaisseur de la couche porteuse (24).

9. Profilé d'étanchéité selon la revendication 1,
**caractérisé en ce que**
la couche d'étanchéité à souplesse élastique (22) est composée de caoutchouc mousse.
